(19) **Europäisches Patentamt**

**European Patent Office**

**Office européen des brevets**

(11) **EP 1 155 078 B1**

(12) **EUROPEAN PATENT SPECIFICATION**

(45) Date of publication and mention
of the grant of the patent:
**05.10.2005 Bulletin 2005/40**

(51) Int Cl.7: **C08K 9/04**, C08K 13/04

(21) Application number: **00913509.6**

(86) International application number:
**PCT/US2000/004105**

(22) Date of filing: **18.02.2000**

(87) International publication number:
**WO 2000/049081 (24.08.2000 Gazette 2000/34)**

(54) **TOUGHENED, HIGH-MODULUS POLYAMIDES**

VERSTÄRKTE POLYAMIDE MIT HOHEM MODUL

POLYAMIDES RENFORCES A HAUT MODULE D'ELASTICITE

(84) Designated Contracting States:
**AT BE CH CY DE DK ES FI FR GB GR IE IT LI LU
MC NL PT SE**

(30) Priority: **19.02.1999 US 120671 P**

(43) Date of publication of application:
**21.11.2001 Bulletin 2001/47**

(73) Proprietor: **E.I. DU PONT DE NEMOURS AND
COMPANY
Delaware 19898 (US)**

(72) Inventor: **WEINBERG, Mark
Wilmington, DE 19810 (US)**

(74) Representative: **Morf, Jan Stefan
Patentanwälte Abitz und Partner
Postfach 86 01 09
81628 München (DE)**

(56) References cited:
**DE-B- 2 659 933          GB-A- 2 301 105
US-A- 3 926 873          US-A- 4 795 768
US-A- 5 412 017          US-A- 5 827 906**

Remarks:
The file contains technical information submitted
after the application was filed and not included in this
specification

**Description**

FIELD OF THE INVENTION

This invention relates to a polyamide composition for molded articles exhibiting desirable combinations of stiffness and impact resistance. More particularly, this invention relates to a composition comprising a polyamide and a mineral filler.

TECHNICAL BACKGROUND OF THE INVENTION

Synthetic polyamides, typified by numerous varieties of nylon, are known in the art to provide useful combinations of stiffness and toughness at room temperature and under moderate deformation rates. However, they become brittle under more extreme conditions such as the very high deformation rates associated with an impact typically characterized by the notched Izod impact resistance of a molded article, ASTM 256.

The Zytel® and Minlon® product lines available from the DuPont Company, Wilmington, DE, include grades of nylon 66 which have been modified in order to provide combinations of stiffness and toughness not available from unmodified nylon 66. Table 1 lists a Minlon® resin and various Zytel® resins, including general purpose unreinforced Zytel®, along with their respective flexural modulus and notched Izod impact resistance.

Table 1

| Properties of Commercial Nylon Resins (all dry as molded) | | | |
|---|---|---|---|
| Zytel® Resin | Description | Flexural Modulus (ASTM D790) MPa(Ksi) | Izod Impact Resistance (ASTM D256) J/m(ft-lbs/in) |
| Zytel® 101 | General Purpose | 2830 (410) | 53 (1.0) |
| Zytel® 408L | plasticized | 1965 (285) | 229 (4.3) |
| Zytel® ST801 | cross-linked elastomer filled | 1689 (245) | 907 (17.0) |
| Zytel® 71G33L | 33% short glass fiber | 6900 (1000) | 128(2.4) |
| Minlon® 10B40 | Mineral filled nylon 66 | 8620(1250) | 32 (0.6) |

Referring to data in Table 1, a Zytel® 408L plasticized nylon resin exhibits a 330% improvement in impact strength but at about 230% reduction in stiffness in comparison to the general purpose Zytel® 101 resin. Plasticizers in general improve processibility, but degrade numerous other mechanical properties. Elastomer filled Zytel® ST801known as a "rubber toughened" or "super-tough" nylon composition exhibits about a 1600% improvement in toughness, but at about a 40% loss in stiffness in comparison to the general purpose Zytel® 101 resin. Additionally, rubber toughened nylons are expensive to produce.

With continuing reference to Table 1, blending short glass fibers in a nylon resin composition (e.g., Zytel® 71G33L) provides about 140% improvement in toughness and about a 140% increase in stiffness over the Zytel® 101. However, glass fibers significantly reduce the moldability of the resulting resin and may lead to property anisotropy, uneven shrinkage, and part warpage. Mineral fillers provide similar improvements in stiffness to the nylon resin but at about a 40% reduction in toughness, even though processibility and product isotropy are improved.

U.S. Patent No. 4,399,246, to Hyde discloses polyamide compositions comprising 50 to 75 parts of resin, 25 to 50 parts of mineral filler, 0.2 to 0.9 parts of aminofunctional silane, and 0.2 to 0.9 parts of a sulfonamide. The mineral fillers include calcined clay, wollastonite, and talc in the size range of 0.2 to 2 micrometers. The stiffness of filled nylon 66 was 5865 MPa while Izod impact resistance was about 65 J/m.

U.S. Patent No. 4,740,538, to Sekutowski discloses a nylon composition containing a kaolin filler precoated with an amino functional silane, the composition further containing a phenol or triethanolamine as an impact modifier.

Wu et al, Proc. Inter. Conf. Pet. Ref. and Petrochem. Proc., 2, pp 802ff (1991) discloses employing a rubber coated $CaCO_3$ to effect improvements in impact resistance of nylon 6.

U.S. Patent No. 5,571,851 to Freeman et al. discloses an Izod impact of 42.6 J/m (0.76 ft-lbs/in) and a flexural modulus of 5620 MPa (816 ksi) when a combination of 25% stearylsilane and 75% aminosilane is incorporated into a composition of nylon 66 and calcined clay comprising 40% of calcined clay. When only the stearylsilane is employed both flexural modulus and Izod impact resistance are significantly lower.

It is known in the art to incorporate fatty acids, particularly stearic acid, into mineral filled polyolefin compositions. For example, U.S. Patent No. 4,795,768 to Ancker et al. discloses a composition consisting of high density polyethylene filled with 50 wt-% of a 3.5 µm $CaCO_3$ pre-treated with 2% by weight of isostearic acid. Izod impact was decreased by about 68% with respect to the unfilled polymer while flexural modulus was increased by about 150%.

Orange, 10th Int. Conf. Deformation, Yield, and Fracture of Polymers, Inst. of Mat., pp. 502ff, (1997) discloses filled polypropylene compositions containing 10% by volume of a 0.1 µm and 2 µm $CaCO_3$ both stearic acid treated and untreated. The compositions containing the stearic acid treated fillers exhibited fracture toughness higher than the unfilled polymer and somewhat higher stiffness. The composition containing the 2 µm untreated filler was similar to the treated composition, but that containing the 0.1 µm untreated filler exhibited a 50% reduction in fracture toughness and about a 45% increase in stiffness.

Suetsugu, The Polymer Processing Society, 6, (1990), discloses an increase of notched Izod impact resistance of 230% in a high molecular weight polypropylene composition containing 30% by weight of stearic acid treated 4.3 µm $CaCO_3$.

U.S. Patent No. 3,926,873 to Aishima et al. discloses compositions comprising inorganic fillers, unsaturated carboxylic acids, and nylon 6 and nylon 66 polymers. Improvements in Izod impact resistance of less than 50% are realized while flexural modulus is increased by 50%. The process of Aishima requires a preliminary reaction step between the filler and the unsaturated carboxylic acid, followed by melt processing with the polymer in the presence of a free-radical generator.

The differences between saturated and unsaturated fatty acids in their interaction with mineral particles is disclosed in Ottewill et al., J. Oil Colour Chemists Assn, 50:844 (1967).

## SUMMARY OF THE INVENTION

In one aspect of the present invention, there is provided a composition comprising nylon 6, nylon 66, or a mixture thereof, about 1%-50% by volume of a mineral filler having an aspect ratio of less than about 5, the filler having an average equivalent spherical diameter in the range of about 0.1 to less than about 3.5 micrometers, and a saturated organic acid, salt thereof, or a mixture thereof, at a concentration of at least about 0.5% by weight of the mineral filler.

In another aspect, the invention relates to a process for forming a composition, comprising the steps of: combining nylon 6, nylon 66, or a mixture thereof with a mineral filler having an aspect ratio of less than 5, the mineral filler having an average equivalent spherical diameter in the range of about 0.1 to about 3.5 micrometers, and a saturated organic acid, salt thereof, or a mixture thereof, at a concentration of at least about 0.5% by weight of the mineral filler, the mineral filler and the nylon being combined at a weight ratio given by the formula:

$$Wf/Wp = [VF/(1-VF)] \bullet Df/Dp$$

where Wf is the weight of the filler, Wp is the weight of the polymer, VF is the desired volume fraction of filler, in the range of about 0.01-0.5, Df is the density of the filler, and Dp is the density of the polymer;

  heating the combination to a temperature above the melting point of the nylon to form a molten composition;
  mixing the molten composition to provide a homogenous melt; and,
  cooling the molten composition.

## DETAILED DESCRIPTION

This invention, through the incorporation of saturated organic acids, salts thereof, or mixtures thereof, into compositions comprising polyamides and mineral fillers, results in improvements in properties over the unfilled polymer and filled polymers containing impact modifiers of the art. This invention improves stiffness at constant toughness, toughness at constant stiffness, and, in certain embodiments, simultaneously improves stiffness and toughness.

Nylon 6, nylon 66, and mixtures thereof, including nylon resins which have been nucleated, pigmented, and otherwise modified, are suitable for the practice of this invention. The nylons of this invention may include small amounts of common additives, typically less than 5% by weight, which may affect toughness or stiffness, including: glass fibers, carbon black, plasticizers, pigments, and other well-known additives commonly employed in the art.

Suitable inorganic fillers for use in this invention are those that do not have significant off-gassing or decompose at typical polyamide processing conditions. These include, but are not limited to: calcium carbonate; oxides such as alumina, silica, and titanium dioxide; sulfates such as barium sulfate; titanates; kaolin clay and other silicates; magnesium hydroxide, and carbon black. In the present invention, an aspect ratio (the average ratio of the largest to the smallest dimension of the filler particle) of less than about 5 avoids stress concentrations and part anisotropies. The preferred fillers are calcium carbonate and titanium dioxide.

The size of the filler particles is stated as the equivalent spherical diameter. The equivalent spherical diameter is the diameter of a sphere having the same volume as the filler particle and may be determined by use of a Sedigraph 5100 (Micrometrics Instrument Corporation, Norcross, GA). The Sedigraph 5100 determines particle size by the sedimentation method, measuring the gravity-induced settling rates of different size particles in a liquid with known properties. The rate at which particles fall through the liquid is described by Stokes' Law. The largest particles fall fastest, while the smallest particles fall slowest. The sedimentation rate is measured using a finely collimated beam of low energy X-rays which pass through the sample cell to a detector. The distribution of particle mass at various points in the cell affects the number of X-ray pulses reaching the detector. This X-ray pulse count is used to derive the particle size distribution expressed as the percent mass at given particle diameters. Since particles rarely exhibit uniform shapes, each particle size is reported as an "Equivalent Spherical Diameter", the diameter of a sphere of the same material with the same speed of sedimentation.

Suitable particles have equivalent spherical diameters in the range of about 0.1 to less than about 3.5 micrometers, most typically about 0.5-2 micrometers.

The size of the filler particles can affect the toughness and/or stiffness properties of the composition of the invention. Particles that are either too large or too small do not produce the benefits of the present invention. A suitable filler particle has a relatively narrow size distribution with particular emphasis on having a minimum number of particles much larger than the mean particle size.

It is believed that the improvements provided by the invention are related to: maximizing nearest neighbor interparticle distance to achieve a distance distribution with a mean value in the range of about 0.1 μm - about 1.0 μm; controlling of the interface between resin and filler, and maintaining continuity of the polymer phase. The nearest neighbor interparticle separation is controlled by the combination of filler size, filler loading, and adequate deagglomeration and dispersion of the filler. The polymer/filler interface is controlled by the use of sufficient but not excessive amounts of the saturated organic acids and/or salts of the invention. The continuity of the polymer phase is determined by the volume loading of filler.

The relationship among mean nearest neighbor interparticle distance (IPD), filler size, d, and required filler loading, ø (as a volume fraction), is given approximately by the equation

$$IPD = d \cdot [(\pi/6\text{ø})^{1/3} - 1].$$

For example, it was found thereby that when the interparticle separation is taken to be 0.3 μm the maximum particle size cannot exceed 20 μm at volume fractions less than 0.50. When the particles occupy about 50% by volume or more, however, the continuity of the polymer matrix is jeopardized. At particle sizes at or below about 0.1 micrometer, the required interparticle separation range is readily achieved at volume loadings well-below 50% provided that the particles can be deagglomerated and homogeneously dispersed which can be very difficult to achieve because of the very high surface forces binding the fine particles together. Also, it is believed that the toughening effect observed in the practice of this invention depends upon the efficient debonding of the filler particle from the resin during impact deformation. The ability to debond decreases with particle size. It is therefore believed that at particle sizes much below 0.1 micrometers, the conditions are no longer favorable for debonding, making these particles sizes unsuitable.

It is believed that the polymer/filler interfacial forces are mediated by one or more saturated organic acids or salts thereof. The requisite amount depends upon the interfacial area -- e.g., the greater the interfacial area, the more organic acid or acid salt is required. The actual amount however will depend upon the size and shape of the particles and the volume loading of the particles.

It is found that the concentration of filler varies with filler size, increasing with increasing size in the suitable range. Thus, if the filler size is at the high end of the range, a higher concentration of filler is needed than if the filler size is at the lower end of the range. The suitable range is about 1 to about 50 vol. %, preferably about 5 to about 30 vol %, and most preferably about 10 to about 20 vol %. One of skill in the art, will recognize, however, that at 1% filler loadings, nylon compositions will exhibit minimal improvements in stiffness or impact resistance.

At filler loadings greater than approximately 30 vol %, it becomes increasingly difficult to achieve a homogeneous distribution of non-agglomerated filler within the polymer matrix using ordinary methods of melt mixing. Hence, filler concentrations of 30-50 vol % are a less preferred embodiment of the present invention.

Suitable saturated organic acids include aliphatic carboxylic acids having about 6-30 carbon atoms optionally substituted by one or more oxygen atoms or sulfur atoms. A suitable acid may optionally contain one or more aliphatic , aromatic, or functionalized side chains. Preferred organic acids include stearic acid. Inorganic salts of the suitable acids are equally suitable, including zinc stearate and the like. It is understood by one of skill in the art that an organic acid in combination with a mineral at elevated temperatures may form a salt therewith so that the acid added to the mixture in the process of the invention may or may not be present in the final product thereof. The organic acids or salts thereof are present at a concentration of at least 0.5% by weight on the weight of the filler. While there is no particular upper limit to concentration of organic acid, in one embodiment of the invention the concentration of organic acid or salt thereof is in the range of about 0.5-to about 4% by weight on the weight of the filler.

It is believed that a useful concentration of acid or acid salt in the composition of the invention corresponds to that at which the acid or salt forms a molecular monolayer on substantially all of the mineral filler surface. Any amount less than that will exhibit less than the optimal combination of properties while any amount more than that serves no function except to dilute the amount of polymer in the composition. The addition of about 2% by weight of stearic acid on the weight of the 0.7 μm $CaCO_3$ is optimal.

The composition of the invention is formed by coating a filler with a saturated organic acid or salt thereof, mixing the coated filler into the polyamide, and pelletizing the product. The saturated organic acids or salts may be, but are not required to be, applied to the filler in a separate coating step prior to processing with polymer. In a method, known in the art, for applying organic acid or salt coatings to mineral fillers, the acid or salt is dissolved in an appropriate solvent and mixed with the filler until it is all coated. The thus coated filler can then be separated from the solution and the remaining solvent removed by drying. In another method, the acid or acid salt, the filler and the polymer are combined at once. Mixing may further be achieved by dispersing the filler into a dispersion or solution of the polymer and the organic acid or salt thereof, followed by drying; Mixing may also be achieved in the melt, either in a batch mixer or a continuous extruder.

Preferably, the ingredients are dry-blended by tumbling followed by feeding to an extruder or batch mixer according to well-established methods of the art. Alternatively, the ingredients can be separately and continuously fed to one or more extruder zones by, for example, the use of weight loss feeders, all of the mixing being performed in the extruder; or the material may be added at once or in stages to a batch type melt blender and the composition formed therein.

In one embodiment of the invention, the ingredients are processed in a twin-screw co-rotating extruder to ensure good mixing. The extrudate is pelletized and subsequently molded into parts by injection molding. The pellets can also be compression molded or a molded or extruded sheet can be thermoformed into a complex shape. Other means known in the art may also be employed to form shaped articles of the composition of the invention.

It is convenient to combine the nylon polymer and filler according to a weight ratio determined by the respective densities thereof and the goal volume fraction of filler. The weight ratio is determined from the equation

$$Wf/Wp = [VF/(1-VF)] \cdot Df/Dp$$

where Wf is the weight of the filler, Wp is the weight of the polymer, VF is the desired volume fraction of filler, in the range of about 0.01-0.5 as herein described, Df is the density of the filler, and Dp is the density of the polymer. The density, D, is not the bulk density but the actual density of the material.

The present invention is further illustrated by the following specific embodiments which are not intended to be limiting thereon.

EXAMPLES

In the following examples, all fillers and resins were dried at 90°C overnight prior to dry-mixing. Melt blending was accomplished in a 28 mm co-rotating twin screw extruder (Werner & Pfleiderer, Ramsey, NJ) at the temperatures and concentrations hereinbelow specified. The extrudate was pelletized. The extruded pellets were dried overnight at 90°C and then processed in a 6 oz., 150 ton Van Dorn injection molding machine equipped with a water-heated mold, into dog-bone shaped tensile bars for tensile testing according to ASTM D638-95 (Type I specimen, 2" long gauge length; 1/2" wide; 1/8" thick) and flexural test bars (5" long, 1/2" wide, 1/8" thick).

The injection molded flexural test bars were then divided into two 2-1/2" long pieces, one close to the gate and referred to as the "near end" and the other far from the gate and referred to as the "far end". Notches of root radius 0.01" were cut into each part with a TMI Notching Cutter according to the process described in ASTM D256. The impact response was studied in notched Izod impact tests according to ASTM D256. Flexural testing was performed according to ASTM D790, with a cross head rate of 0.127 cm/min (0.05 inch/min). The values of the mechanical parameters determined from flexural and Izod tests were calculated as averages over measurements on at least 3 specimens. The standard deviation for Izod results was about 0.53 J/m (0.01 ft-lb/in).

In Examples 1-5, and Comparative Examples 1-17, the compounding extruder barrel temperature was 240°C, and the throughput rate was about 9.1 kg/hr (20 lbs/hour). Injection molding was conducted with a barrel temperature of 240°C and a mold temperature of 40°C.

EXAMPLES 1-2 AND COMPARATIVE EXAMPLES 1-7

Capron 8202 nylon 6 (Allied-Signal, Richmond, VA) was injection molded without filler in Comparative Example (Comp. Ex.) 1.

In Comparative Examples 2 and 3, Ti-Pure® R101, uncoated 0.29 μm titanium dioxide (DuPont Company, Wilmington, DE) was melt blended with Capron 8202 at concentrations of 5 and 10 vol %, respectively.

In Examples (Ex.) 1 and 2, 50 grams of stearic acid (SA) was mixed with 150 grams of chloroform in a beaker. 5000 grams of uncoated Ti-Pure® R-104-DD $TiO_2$ was charged into a powder mixer. The solution was added with a pipet while the $TiO_2$ (titanium dioxide) was stirred. After the addition was complete, the mixture was stirred for 3 minutes at medium speed and then dried at 100°C for 2 hours.

The stearic acid (SA) treated titanium dioxide so produced was melt blended with Capron 8202 at concentrations of 5 and 10 vol % respectively, and molded into test bars.

In Comparative Examples 4 and 5, Ti-Pure® R104 0.22 μm titanium dioxide coated with octa-triethoxy silane (OTES) was obtained from DuPont, melt blended with Capron 8202 at concentrations of 5 and 10 vol %, respectively, and molded into test bars.

In Comparative Examples 6 and 7, 3000 grams of uncoated Ti-Pure® R-104-DD $TiO_2$ was charged into a powder mixer. Thirty grams of 3-aminopropyl triethoxy silane was added by dropping pipet while the $TiO_2$ was stirred. After the addition was complete, the mixture was stirred for 3 minutes at medium speed The product was then dried at 100°C for 2 hours.

The APS treated titanium dioxide was melt blended with Capron 8202 at concentrations of 5 and 10 vol %, respectively, and molded into test bars.

The test results in Table 2 show that the stearic acid coated particles have a surprising increase in Izod toughness as the filler volume is increased, whereas, the other examples show a decrease in Izod toughness.

Table 2

Properties of TiO$_2$-filled Nylon 6

| Example | Surface Treatment | Vo.% TiO$_2$ | Izod (ft-lb/in) | | Izod (J/m) | |
|---|---|---|---|---|---|---|
| | | | Near End | Far End | Near End | Far End |
| Comp. Ex. 1 | N.A. | 0 | 1.1 | 1.1 | 58.3 | 58.3 |
| Ex. 1 | SA | 5 | 1.3 | 1.3 | 68.9 | 68.9 |
| Ex. 2 | SA | 10 | 1.3 | 1.5 | 68.9 | 79.5 |
| Comp. Ex. 2 | Uncoated | 5 | 0.9 | 0.98 | 47.7 | 51.94 |
| Comp. Ex. 3 | Uncoated | 10 | 0.9 | 0.84 | 47.7 | 44.52 |
| Comp. Ex. 4 | OTES | 5 | 1.1 | 1.2 | 58.3 | 63.6 |
| Comp. Ex. 5 | OTES | 10 | 0.98 | 1.1 | 51.94 | 58.3 |
| Comp. Ex. 6 | APS | 5 | 1.1 | 1.2 | 58.3 | 63.6 |
| Comp. Ex. 7 | APS | 10 | 0.87 | 1.1 | 46.11 | 58.3 |

## EXAMPLES 3-5 AND COMPARATIVE EXAMPLES 8-17

For Comparative Example 8, Capron 8200 nylon 6 was injection molded without filler. In Comparative Examples 9-11, Albafil (AF) uncoated 0.7 μm calcium carbonate (Specialty Minerals Inc., Bethlehem, PA) was melt blended with Capron 8200 nylon 6 (Allied-Signal, Somerville NJ) at concentrations of 5, 10, and 20 vol % respectively, and injection molded into test bars.

In Comparative Examples 12-14, 1500 grams of uncoated 0.7 μm Albafil was dried at 150°C in a vacuum oven overnight. This material was then placed into a resin kettle with 2 liters of ethanol. A separate solution of 100 grams of Zonyl-UR, a fluorosurfactant available from DuPont, in I liter of ethanol was heated to 80°C for 0.5 hour. The two mixtures were combined and stirred for 5 hours. The slurry so formed was allowed to settle for 3 days and then filtered with a Buchner funnel and dried overnight in an 80°C vacuum oven.

In Comparative Examples 15-17, 1500 grams of undried, uncoated 0.7 μm Albafil was mixed with 1500 ml of hexane. A separate solution of 20 grams of APS in 500 ml of hexane was added to the Albafil dispersion and the mixture stirred for 5 hours, filtered by Buchner funnel, and dried overnight in a 100°C vacuum oven.

In Examples 3-5, Super-Pflex 200 (S200 or SPF) stearic acid-coated 0.7 micrometer calcium carbonate was obtained from Specialty Minerals, Inc. The three thus-treated calcium carbonate compositions were melt blended with Capron 8200 nylon 6 at concentrations of each of 5 vol %,10 vol %, and 20 vol %, and all subsequently molded into test bars and the test results are provided in Table 3. The results shown in Table 3 demonstrate that S200 with a fatty acid surface coating causes a increase in izod toughness. None of the other surface treatments on the identical CaCO3, shown in Table 3, result in the same phenomenon.

Table 3

Properties of CaCO₃-filled nylon 6

| Example | FILLER | Surface Treatment | Vol. % CaCO₃ | Izod (ft-lb/in) | | Izod (J/m) | |
|---|---|---|---|---|---|---|---|
| | | | | Near End | Far End | Near End | Far End |
| Comp. Ex. 8 | NONE | | 0 | 1 | 1.08 | 53 | 57.24 |
| Comp. Ex. 9 | Albafil | None | 5 | 0.6 | 0.7 | 31.8 | 37.1 |
| Comp. Ex. 10 | Albafil | None | 10 | 0.6 | 0.62 | 31.8 | 32.86 |
| Comp. Ex. 11 | Albafil | None | 20 | 0.76 | 0.81 | 40.28 | 42.93 |
| Ex. 3 | S200 | SA | 5 | 1.57 | 1.79 | 83.21 | 94.87 |
| Ex. 4 | S200 | SA | 10 | 1.81 | 2.27 | 95.93 | 120.31 |
| Ex. 5 | S200 | SA | 20 | 2.08 | 2.3 | 110.24 | 121.9 |
| Comp. Ex. 12 | Albafil | Zonyl-UR | 5 | 0.76 | 0.92 | 40.28 | 48.76 |
| Comp. Ex. 13 | Albafil | Zonyl-UR | 10 | 0.92 | 1 | 48.76 | 53 |
| Comp. Ex. 14 | Albafil | Zonyl-UR | 20 | 0.65 | 0.57 | 34.45 | 30.21 |
| Comp. Ex. 15 | Albafil | APS | 5 | 0.76 | 0.81 | 40.28 | 42.93 |
| Comp. Ex. 16 | Albafil | APS | 10 | 0.81 | 0.81 | 42.93 | 42.93 |
| Comp. Ex. 17 | Albafil | APS | 20 | 0.81 | 0.87 | 42.93 | 46.11 |

EXAMPLES 6-10 AND COMPARATIVE EXAMPLES 18-24

In Comparative Example 18, high viscosity Zytel® 42A nylon 66 (DuPont) was injection molded without filler. The three calcium carbonate fillers of different average particle sizes, listed in Table 4 were obtained from Specialty Minerals Inc. All three fillers were similarly surface treated with stearic acid. Each of the three were melt blended and molded into test bars at the concentrations shown with Zytel® 42A nylon 66 with the extruder and molding machine barrel temperatures at 270°C and the mold temperature at 90°C. The results of Izod testing of these samples are shown in Table 4. The data of Table 4 shows that both stiffness and impact resistance are simultaneously enhanced with filler particles within a range of about 0.1 to less than about 3.5 microns.. Table 4 shows that at filler sizes below this range, of 0.07 µm, and at 3.5 µm the Izod values did not increase.

EP 1 155 078 B1

| Table 4 | | | | | | | | | | | | |
|---|---|---|---|---|---|---|---|---|---|---|---|---|
| Properties of Stearic Acid Treated CaCO₃-filled Nylon 66 | | | | | | | | | | | | |
| | | | | Izod (ft-lb/in) | | Izod(J/μ) | | | | | | |
| Example | Filler | Filler Size (μm) | Vol. % CaCO₃ | Near End | Far End | Near End | Far End | Flex Mod. (ksi) | Flex Mod MPa | Flex Strength (ksi) | Flex Strength MPa | Elong. % |
| Comp. Ex. 18 | None | - | 0 | 1.04 | 1.1 | 55.12 | 58.3 | 414 | 2860 | 15.97 | 110 | 97.5 |
| Ex. 6 | S200 | 0.7 | 5 | 0.8 | 0.88 | 42.4 | 46.64 | 448 | 3090 | 16.73 | 120 | 66.7 |
| Ex. 7 | S200 | 0.7 | 10 | 0.8 | 1.07 | 42.4 | 56.71 | 472 | 3260 | 15.41 | 110 | 33.3 |
| Ex. 8 | S200 | 0.7 | 15 | 1.28 | 1.74 | 67.84 | 92.22 | 506 | 3490 | 14.76 | 100 | 48.3 |
| Ex. 9 | S200 | 0.7 | 20 | 1.58 | 2 | 83.74 | 106 | 541 | 3730 | 13.83 | 100 | 48.3 |
| Ex. 10 | S200 | 0.7 | 25 | 1.6 | 1.71 | 84.8 | 90.63 | 573 | 3950 | 12.69 | 90 | 54.2 |
| Comp. Ex. 19 | UPF* | 0.07 | 5 | 0.75 | 0.8 | 39.75 | 42.4 | | | | | |
| Comp. Ex. 20 | UPF* | 0.07 | 15 | 0.56 | 0.56 | 29.68 | 29.68 | | | | | |
| Comp. Ex. 21 | UDF* | 0.07 | 25 | 0.4 | 0.4 | 21.2 | 21.2 | | | | | |
| Comp. Ex. 22 | HPF** | 3.5 | 5 | 0.8 | 0.8 | 42.4 | 42.4 | | | | | |
| Comp. Ex. 23 | HPF** | 3.5 | 25 | 0.8 | 0.8 | 42.4 | 42.4 | | | | | |
| Comp. Ex. 24 | HPF** | 3.5 | 30 | 0.72 | 0.78 | 38.16 | 41.34 | | | | | |

In Comparative Example 25, general purpose viscosity Zytel® 101 nylon 66 (DuPont) was injection molded without filler. In Examples 11-14, Super-Pflex® 200 calcium carbonate was melt blended with Zytel® 101 and the resulting composition molded into test bars similar to Examples 6-10 in Table 4 except that the mold temperature was lowered to 40°C.

Table 5

| Properties of 0.7 μm CaCO$_3$-filled nylon 66 | | | | | |
|---|---|---|---|---|---|
| | | Izod (ft-lb/in) | | Izod(J/m) | |
| Example | Vol % Super-Pflex. 200 | Near End | Far End | Near End | Far End |
| Comp. Control Ex. 25 | 0 | 1.3 | 1.2 | 68.9 | 63.6 |
| Ex. 11 | 5 | 1 | 1.1 | 53 | 58.3 |
| Ex. 12 | 10 | 0.9 | 1 | 47.7 | 53 |
| Ex. 13 | 20 | 1.5 | 1.9 | 79.5 | 100.7 |
| Ex. 14 | 25 | 1.1 | 1.4 | 58.3 | 74.2 |

EXAMPLES 15-19 AND COMPARATIVE EXAMPLES 26-32

The conditions of Examples 6-10 and Comparative Examples 18-24 described above were repeated for Examples 15-19 and Comparative Examples 26-32 with the exception that the polymer was Zytel® 132F, a nylon 66 resin (DuPont), and the concentrations were as shown in Table 6. The results with S200 show an increase in Izod toughness with increasing volume % at a filler size of .7 μm Negligible increase in Izod toughness was obtained with fillers of 0.07, below the range of 0.1 to less than about 3.5, and 3.5 which is above this range.

Table 6

| Example | Filler | Filler Size (μm) | Vol. % CaCO$_3$ | Izod (ft-lb/in) | | Izod (J/m) | |
|---|---|---|---|---|---|---|---|
| | | | | Near End | Far End | Near End | Far End |
| Comp. Ex. 26 | Control | | 0 | 0.75 | 0.78 | 39.75 | 41.34 |
| Comp. Ex. 27 | UPF* | 0.07 | 5 | 0.51 | 0.59 | 27.03 | 31.27 |
| Comp. Ex. 28 | UPF | 0.07 | 15 | 0.54 | 0.4 | 28.62 | 21.2 |
| Comp. Ex. 29 | UPF | 0.07 | 25 | 0.48 | 0.35 | 25.44 | 18.55 |
| Ex. 15 | S200 | 0.7 | 5 | 0.7 | 0.78 | 37.1 | 41.34 |
| Ex. 16 | S200 | 0.7 | 10 | 0.94 | 1.21 | 49.82 | 64.13 |
| Ex. 17 | S200 | 0.7 | 15 | 1.1 | 1.21 | 58.3 | 64.13 |
| Ex. 18 | S200 | 0.7 | 20 | 1.13 | 1.26 | 59.89 | 66.78 |
| Ex.19 | S200 | 0.7 | 25 | 1.07 | 1.05 | 56.71 | 55.65 |
| Comp. Ex. 30 | HPF** | 3.5 | 5 | 0.78 | 0.67 | 41.34 | 35.51 |
| Comp. Ex. 31 | HPF | 3.5 | 15 | 0.73 | 0.75 | 38.69 | 39.75 |
| Comp. Ex. 32 | HPF | 3.5 | 25 | 0.78 | 0.73 | 41.34 | 38.69 |

*UPF is Ultra-Pflex®

**HPF is HiPflex®

EXAMPLES 20-25

Following the procedure of Examples 3-5, two grades of 0.7-1 μm Magnifin® fatty acid coated magnesium hydroxide (Lonza, Inc, Fairlawn, NJ) were combined with Capron 8200 nylon 6. Results are shown in Table 7.

Table 7

| Properties of MgOH-filled nylon 6 | | | | | | |
|---|---|---|---|---|---|---|
| | | | Izod Impact (ft-lbs/in) | | Izod Impact (J/m) | |
| Example | Filler | Vol-% filler | Near End | Far End | Near End | Far End |
| Comp. Ex. 33 | Control | 0 | 1.04 | 1.2 | 55.12 | 63.6 |
| Ex. 20 | Magnifin H-10C | 5 | 1.41 | 1.41 | 74.73 | 74.73 |
| Ex. 21 | Magnifin H-10C | 15 | 1.04 | 1.06 | 55.12 | 56.18 |
| Ex. 22 | Magnifin H-10C | 25 | 1.04 | 0.96 | 55.12 | 50.88 |
| Ex. 23 | Magnifin H-5IV | 5 | 0.96 | 1.28 | 50.88 | 67.84 |
| Ex. 24 | Magnifin H-5IV | 15 | 0.96 | 1.2 | 50.88 | 63.6 |
| Ex. 25 | Magnifin H-5IV | 25 | 0.96 | 0.96 | 50.88 | 50.88 |

EXAMPLES 26 AND 27, COMPARATIVE EXAMPLES 34 AND 35

In Comparative Examples 34 and 35, Zytel® 101 and Zytel® 132F were each combined with Zytel® 70G643L 43%glass fiber filled nylon 66 in the feed hopper of the injection molding machine. The weight ratio was 1 part Zytel® 70G643L to 9 parts of the resin blend, to give 4.3 wt. % glass compositions. In Examples 26 and 27, the Zytel® resins were first extrusion blended with 20 vol % Super-Pflex® 0.7 μm stearic acid treated $CaCO_3$, the thus blended resin then was mixed as in Comparative Examples 34 and35. Test bars were molded with a barrel temperature of 270°C and a mold temperature of 90°C. The data in Table 8 shows that in the presence of glass there is an improvement in izod toughness due to the addition of filler.

Table 8

| Properties of $CaCO_3$-Glass Filled Nylon 66 | | | | | | |
|---|---|---|---|---|---|---|
| | | | Izod Impact (ft-lb/in) | | Izod Impact (J/m) | |
| Example | Resin | Vol% Filler | Near Izod | Far Izod | Near Izod | Far Izod |
| Comp. Ex. 34 | Zytel® 101 | 0 | 0.62 | 0.7 | 32.86 | 37.1 |
| Example 26 | Zytel® 101 | 20 | 0.78 | 0.91 | 41.34 | 48.23 |
| Comp. Ex. 35 | Zytel® 132F | 0 | 0.7 | 0.65 | 37.1 | 34.45 |
| Example 27 | Zytel® 132F | 20 | 0.75 | 0.89 | 39.75 | 47.17 |

EXAMPLES 28-30 AND COMPARATIVE EXAMPLE 36

In Comparative Example 36, Zytel® 101 (DuPont) nylon 66 was melt-blended at 270°C with Capron® 8200 (Allied-Signal) nylon 6 in a 30/70 weight ratio. In Examples 28-30, Super-Pflex® 200 stearic-acid-coated calcium carbonate at 5, 10, and 20 vol. % was melt-blended with the Zytel® 101/Capron® 8200 30/70blend. All were subsequently molded into test bars. The test results are provided in Table 9. The results show an increase in Izod toughness in blends of nylon 6 and 66.

Table 9

| | | | Izod Impact (ft-lb/in) | | Izod Impact (J/m) | |
|---|---|---|---|---|---|---|
| | E91653-125- | Vol-% Superpflex® 200 | Near End | Far End | Near End | Far End |
| Comp. Ex 36 | 8 | 0 | 1.26 | 1.34 | 66.78 | 71.02 |
| Ex. 28 | 9 | 5 | 0.88 | 1.04 | 46.64 | 55.12 |
| Ex. 29 | 10 | 10 | 0.82 | 0.72 | 43.46 | 38.16 |
| Ex. 30 | 11 | 20 | 1.53 | 1.55 | 81.09 | 82.15 |

EXAMPLES 31-33 AND COMPARATIVE EXAMPLE 37

In Comparative Example 37, Capron® 8200 nylon 6 was melt-blended with 20 vol. % of uncoated 0.7 μm Albafil® calcium carbonate. In Example 31, 1500 grams of uncoated Albafil® was mixed for 10 minutes in a V-cone blender with a solution of 15 grams of decanoic acid in 50 ml of chloroform. In Example 32, 1000 grams of uncoated Albafil® was mixed for 15 minutes in a V-cone blender with 20 grams of decanoic acid. In Example 33, 1000 grams of uncoated Albafil® was mixed for 15 minutes in a V-cone blender with 40 grams of decanoic acid. All coated particles were dried overnight in a hood and then in an oven at 100°C for 1 hour. Both the uncoated and coated particles were melt-blended with Capron® 8200 nylon 6 to give a concentration of 20 vol. % and injection molded into bars. Table 10 shows that another saturated carboxylic acid, decanoic acid provides increased Izod toughness.

Table 10

|  | E91653- | Wt% Decanoic Acid on Albafil® Filler | Izod Impact (ft-lb/in) | | Izod Impact (J/m) | |
|---|---|---|---|---|---|---|
|  |  |  | Near End | Far End | Near End | Far End |
| Comp. Ex. 37 | 142-2 | 0 | 0.62 | 0.81 | 32.86 | 42.93 |
| Ex. 31 | 125-3 | 1 | 0.55 | 0.66 | 29.15 | 34.98 |
| Ex. 32 | 148-6 | 2 | 0.6 | 0.63 | 31.8 | 33.39 |
| Ex. 33 | 148-7 | 4 | 1.57 | 1.27 | 83.21 | 67.31 |

EXAMPLES 34-37 AND COMPARATIVE EXAMPLE 37

In Comparative Example 37, Capron® 8200 nylon 6 was melt-blended with 20 vol. % of uncoated 0.7 μm Albafil® calcium carbonate. In Example 34, 1500 grams of uncoated Albafil® was mixed for 10 minutes in a V-cone blender with a solution of 15 grams of stearic acid in 50 ml of chloroform. The coated particles were dried overnight in a hood. In Example 35, 1000 grams of uncoated Albafil® was mixed for 15 minutes in a V-cone blender with 20 grams of stearic acid in 100 ml of warmed chloroform. The coated particles were dried overnight in a hood and then in an oven at 100°C for 1 hour. In Example 36, 1500 grams of uncoated Albafil® was mixed for 10 minutes in a V-cone blender with a solution of 37.5 grams of stearic acid in 50 ml of chloroform. The coated particles were dried in an oven at 100°C for 1 hour. In Example 37, 1000 grams of uncoated Albafil® was mixed for 15 minutes in a V-cone blender with 40 grams of stearic acid in 150 ml of warmed chloroform. The coated particles were dried overnight in a hood and then in an oven at 100°C for 1 hour. Both the uncoated and coated particles were melt-blended with Capron® 8200 nylon 6 to give a concentration of 20 vol. % and injection molded into bars. Table 11 shows that a stearic acid concentration of about 2% on the particles was necessary to increase Izod toughness at 20 vol. % total filler. Table 11 also shows that pure stearic increased Izod toughness.

Table 11

|  |  | Wt. % Stearic Acid on Albafil® Filler | Izod Impact (ft-lb/in) | | Izod Impact (J/m) | |
|---|---|---|---|---|---|---|
|  |  |  | Near End | Far End | Near End | Far End |
| Comp. Ex. 37 | E91653-142-2 | 0.00 | 0.62 | 0.81 | 32.86 | 42.93 |
| Ex. 34 | E91653-125-5 | 1.00 | 0.53 | 0.58 | 28.09 | 30.74 |
| Ex. 35 | E94220-14-3 | 2.00 | 1.89 | 2.35 | 100.17 | 124.55 |
| Ex. 36 | E91653-142-7 | 2.50 | 2.21 | 2.37 | 117.13 | 125.61 |
| Ex. 37 | E94220-14-4 | 4.00 | 2.08 | 2.16 |  |  |

EXAMPLES 38-40 AND COMPARATIVE EXAMPLE 37

In Comparative Example 37, Capron® 8200 nylon 6 was melt-blended with 20 vol. % of uncoated 0.7 μm Albafil® calcium carbonate. In Example 38, 1500 grams of uncoated Albafil® was mixed for 10 minutes in a V-cone blender with a solution of 15 grams of zinc stearate in 30 ml of toluene. The coated particles were dried in an oven at 100°C for one hour. In Example 39, 1000 grams of uncoated Albafil® was mixed for 15 minutes in a V-cone blender with a solution of 20 grams of zinc stearate in 100 ml of chloroform. In Example 40, 1000 grams of uncoated Albafil® was mixed for 15 minutes in a V-cone blender with a solution of 40 grams of zinc stearate in 150 ml of chloroform. The coated particles in Examples 39 and 40 were dried overnight in a hood and then in an oven at 100°C for one hour. Both the uncoated and coated particles were melt-blended with Capron® 8200 nylon 6 to give a concentration of 20 vol. % and injection molded into bars. Table 12 shows that the zinc stearate salt increased Izod toughness.

Table 12

|  | E91653- | Wt. % Zinc Stearate on Albafil® Filler | Izod Impact (ft-lb/in) | | Izod Impact (J/m) | |
|---|---|---|---|---|---|---|
|  |  |  | Near End | Far End | Near End | Far End |
| Comp. Ex. 37 | 142-2 | 0 | 0.62 | 0.81 | 32.86 | 42.93 |
| Ex. 38 | 142-8 | 1 | 2.07 | 2.4 | 109.71 | 127.2 |
| Ex. 39 | 148-10 | 2 | 1.54 | 1.49 | 81.62 | 78.97 |
| Ex. 40 | 148-11 | 4 | 2 | 2.1 | 106 | 111.3 |

**Claims**

1. A composition comprising nylon 6, nylon 66, or a mixture thereof, with about 1%-50% by volume of a mineral filler having an aspect ratio of less than about 5, the filler having an average equivalent spherical diameter in the range of about 0.1 to less than about 3.5 micrometers, and a saturated organic acid, a salt thereof, or a mixture thereof, at a concentration of at least 0.5% by weight of the mineral filler.

2. The composition according to Claim 1 wherein the composition comprises about 5-30% by volume of a mineral filler.

3. The composition according to Claim 1 wherein the composition comprises about 10-20% by volume of a mineral filler.

4. The composition of according to Claim 1 wherein the average equivalent spherical diameter is about 0.5 to about 2 micrometers.

5. The composition according to Claim 1 wherein the concentration of saturated organic acid, salt thereof, or mixture thereof is in the range of about 0.5-4%.

6. The composition according to Claim 1 wherein the saturated organic acid, salt thereof, or mixture thereof comprises one or more saturated fatty acids, salts thereof, or a mixture thereof.

7. The composition according to Claim 6 wherein the saturated fatty acid is stearic acid.

8. The composition according to Claim 4 wherein the saturated organic acid is stearic acid at a concentration of about 2% by weight on the weight of the filler.

9. The composition according to Claim 1 wherein the inorganic filler is calcium carbonate or titanium dioxide.

10. The composition according to Claim 1 comprising a shaped article.

11. A process for forming a composition comprising the steps of:

    (a) combining nylon 6, nylon 66, or a mixture thereof with a mineral filler having an aspect ratio of less than 5, the filler having an average equivalent spherical diameter in the range of about 0.1 to less than about 3.5 micrometers, and a saturated organic acid, salt thereof, or mixture thereof, at a concentration of at least about 0.5% by weight of the mineral filler, the filler and polymer being combined at a weight ratio given by the formula:

$$Wf/Wp = [VF/(1-VF)] \cdot Df/Dp$$

    where Wf is the weight of the filler, Wp is the weight of the polymer, VF is the desired volume fraction of filler, in the range of about 0.01-0.5, Df is the density of the filler, and Dp is the density of the polymer;
(b) heating the combination to a temperature above the melting point of the nylon to form a molten composition;
(c) mixing the molten composition to provide a homogenous melt; and,
(d) cooling the molten composition.

12. The process of Claim 11 wherein VF is in the range of about 0.10-0.20.

13. The process of Claim 11 wherein the average equivalent spherical diameter is about 0.5-2 micrometers.

14. The process of Claim 11 wherein the saturated organic acid, salt thereof, or mixture thereof comprises saturated fatty acids, salts thereof, or a mixture thereof.

15. The process of Claim 13 wherein the saturated organic acid is stearic acid at a concentration of about 2% by weight on the weight of the filler.

16. The process of Claim 14 wherein the saturated fatty is stearic acid.

17. The process of Claim 11 wherein the inorganic filler is calcium carbonate or titanium dioxide.


**Patentansprüche**

1. Zusammensetzung, welche Nylon 6, Nylon 66 oder eine Mischung derselben enthält, mit etwa 1 Vol.-% - 50 Vol.-% eines mineralischen Füllmittels mit einem Aspektverhältnis von weniger als etwa 5, wobei das Füllmittel einen durchschnittlichen, äquivalenten, kugelförmigen Durchmesser in dem Bereich von etwa 0,1 bis zu weniger als etwa 3,5 Mikrometer aufweist, und eine gesättigte organische Säure, ein Salz derselben, oder eine Mischung derselben, bei einer Konzentration von mindestens 0,5 Gew.-% des mineralischen Füllmittels.

2. Zusammensetzung gemäß Anspruch 1, bei welcher die Zusammensetzung etwa 5 Vol.-% - 30 Vol.-% eines mineralischen Füllmittels enthält.

3. Zusammensetzung gemäß Anspruch 1, bei welcher die Zusammensetzung etwa 10 Vol.-% - 20 Vol.-% eines mineralischen Füllmittels enthält.

4. Zusammensetzung gemäß Anspruch 1, bei welcher der durchschnittliche, äquivalente, kugelförmige Durchmesser bei etwa 0,5 bis etwa 2 Mikrometer liegt.

5. Zusammensetzung gemäß Anspruch 1, bei welcher die Konzentration der gesättigten organischen Säure, des Salzes derselben, oder der Mischung derselben in dem Bereich von etwa 0,5 - 4 % liegt.

6. Zusammensetzung gemäß Anspruch 1, bei welcher die gesättigte organische Säure, das Salz derselben, oder die Mischung derselben eine oder mehrere gesättigte Fettsäuren, Salze derselben, oder eine Mischung derselben umfasst.

7. Zusammensetzung gemäß Anspruch 6, bei welcher die gesättigte Fettsäure aus Stearinsäure besteht.

8. Zusammensetzung gemäß Anspruch 4, bei welcher die gesättigte organische Säure aus Stearinsäure besteht mit einer Konzentration von etwa 2 Gew.-% des Gewichtes des Füllmittels.

9. Zusammensetzung gemäß Anspruch 1, bei welcher das anorganische Füllmittel aus Calciumcarbonat oder Titandioxid besteht.

10. Zusammensetzung gemäß Anspruch 1, welche aus einem geformten Artikel besteht.

11. Verfahren zur Herstellung einer Zusammensetzung, welches die folgenden Verfahrensschritte umfasst:

a) ein Kombinieren von Nylon 6, Nylon 66 oder einer Mischung derselben mit einem mineralischen Füllmittel mit einem Aspektverhältnis von weniger als 5, wobei das Füllmittel einen durchschnittlichen, äquivalenten, kugelförmigen Durchmesser in dem Bereich von etwa 0,1 bis zu weniger als etwa 3,5 Mikrometer aufweist, und einer gesättigten organischen Säure, einem Salz derselben, oder einer Mischung derselben, bei einer Konzentration von mindestens etwa 0,5 Gew.-% des mineralischen Füllmittels, wobei das Füllmittel und das Polymer in einem Gewichtsverhältnis miteinander kombiniert werden, welches durch die folgende Formel gegeben wird:

$$Wf/Wp = [VF/(1-VF)] \times Df/Dp$$

wobei Wf das Gewicht des Füllmittels darstellt, Wp das Gewicht des Polymers ist, VF die gewünschte Volumenfraktion des Füllmittels in dem Bereich von etwa 0,01-0,5 darstellt, Df für die Dichte des Füllmittels und Dp fiir die Dichte des Polymers steht;
b) ein Erhitzen der Kombination auf eine Temperatur oberhalb des Schmelzpunktes des Nylons, um eine geschmolzene Zusammensetzung zu bilden;
c) in Mischen der geschmolzenen Zusammensetzung, um eine homogene Schmelze zu liefern; und
d) ein Abkühlen der geschmolzenen Zusammensetzung.

12. Verfahren gemäß Anspruch 11, bei welchem VF in dem Bereich von etwa 0,10 - 0,20 liegt.

13. Verfahren gemäß Anspruch 11, bei welchem der durchschnittliche, äquivalente, kugelförmige Durchmesser bei etwa 0,5 - 2 Mikrometer liegt.

14. Verfahren gemäß Anspruch 11, bei welchem die gesättigte organische Säure, das Salz derselben, oder die Mischung derselben gesättigte Fettsäuren, Salze derselben, oder eine Mischung derselben enthält.

15. Verfahren gemäß Anspruch 13, bei welchem die gesättigte organische Säure aus Stearinsäure besteht mit einer Konzentration von etwa 2 Gew.-% bezogen auf das Gewicht des Füllmittels.

16. Verfahren gemäß Anspruch 14, bei welchem die gesättigte organische Säure aus Stearinsäure besteht.

17. Verfahren gemäß Anspruch 11, bei welchem das anorganische Füllmittel aus Calciumcarbonat oder Titandioxid besteht.

## Revendications

1. Composition comprenant un nylon 6, un nylon 66, ou un mélange de ceux-ci, avec environ 1%-50% en volume d'une charge minérale présentant un rapport de forme de moins d'environ 5, la charge possédant un diamètre sphérique équivalent moyen dans l'intervalle d'environ 0,1 à moins d'environ 3,5 micromètres, et un acide organique saturé, un sel de celui-ci, ou un mélange de ceux-ci, à une concentration d'au moins 0,5% en poids de la charge minérale.

2. Composition suivant la revendication 1, dans laquelle la composition comprend environ 5-30% en volume d'une charge minérale.

3. Composition suivant la revendication 1, dans laquelle la composition comprend environ 10-20% en volume d'une charge minérale.

4. Composition suivant la revendication 1, dans laquelle le diamètre sphérique équivalent moyen est d'environ 0,5 à environ 2 micromètres.

5. Composition suivant la revendication 1, dans laquelle la concentration d'acide organique saturé, de sel de celui-ci, ou de mélange de ceux-ci, est dans l'intervalle d'environ 0,5-4%.

6. Composition suivant la revendication 1, dans laquelle l'acide organique saturé, un sel de celui-ci, ou un mélange de ceux-ci, comprend un ou plusieurs acides gras saturés, sels de ceux-ci, ou un mélange de ceux-ci.

7. Composition suivant la revendication 6, dans laquelle l'acide gras saturé est l'acide stéarique.

**8.** Composition suivant la revendication 4, dans laquelle l'acide organique saturé est l'acide stéarique à une concentration d'environ 2% en poids sur le poids de la charge.

**9.** Composition suivant la revendication 1, dans laquelle la charge minérale est le carbonate de calcium ou le dioxyde de titane.

**10.** Composition suivant la revendication 1, comprenant un article façonné.

**11.** Procédé pour la formation d'une composition comprenant les étapes:

(a) de combinaison de nylon 6, de nylon 66, ou d'un mélange de ceux-ci, avec une charge minérale présentant un rapport de forme de moins de 5, la charge possédant un diamètre sphérique équivalent moyen dans l'intervalle d'environ 0,1 à moins d'environ 3,5 micromètres, et un acide organique saturé, d'un sel de celui-ci, ou d'un mélange de ceux-ci, à une concentration d'au moins environ 0,5% en poids de la charge minérale, la charge et le polymère étant combinés à un rapport en poids donné par la formule:

$$Wf/Wp = [VF/(1-VF)]*Df/Dp$$

où Wf est le poids de la charge, Wp est le poids du polymère, VF est la fraction de volume désirée de charge, dans l'intervalle d'environ 0,01-0,5, Df est la densité de la charge, et Dp est la densité du polymère;
(b) de chauffage de la combinaison à une température au-dessus du point de fusion du nylon pour former une composition fondue;
(c) de mélange de la composition fondue pour donner un bain de fusion homogène; et
(d) de refroidissement de la composition fondue.

**12.** Procédé suivant la revendication 11, dans lequel VF est dans l'intervalle d'environ 0,10-0,20.

**13.** Procédé suivant la revendication 11, dans lequel le diamètre sphérique équivalent moyen est d'environ 0,5-2 micromètres.

**14.** Procédé suivant la revendication 11, dans lequel l'acide organique saturé, un sel de celui-ci, ou un mélange de ceux-ci, comprend des acides gras saturés, des sels de ceux-ci, ou un mélange de ceux-ci.

**15.** Procédé suivant la revendication 13, dans lequel l'acide organique saturé est l'acide stéarique à une concentration d'environ 2% en poids sur le poids de la charge.

**16.** Procédé suivant la revendication 14, dans lequel l'acide gras saturé est l'acide stéarique.

**17.** Procédé suivant la revendication 11, dans lequel la charge minérale est le carbonate de calcium ou le dioxyde de titane.